# EUROPÄISCHE PATENTSCHRIFT

(11) **EP 1 954 473 B1**
(45) Veröffentlichungstag und Bekanntmachung des Hinweises auf die Patenterteilung: **17.05.2017**
(21) Anmeldenummer: 06792787.1
(22) Anmeldetag: 11.08.2006
(51) Int. Cl.: B29C 65/14, B29C 65/50

(54) **SCHWEISSVERFAHREN MITTELS LASERSTRAHLUNG**
WELDING METHOD BY MEANS OF LASER RADIATION
PROCEDE DE SOUDAGE PAR RAYONNEMENT LASER

(30) Priorität: 24.11.2005 DE 102005056286
(43) Veröffentlichungstag der Anmeldung: 13.08.2008
(73) Patentinhaber: Evonik Degussa GmbH, 45128 Essen (DE)
(72) Erfinder: GÖRING, Rainer, 46325 Borken (DE); WIELPÜTZ, Martin, 55128 Mainz (DE); BAUMANN, Franz-Erich, 48249 Dülmen (DE); KUHMANN, Karl, 48249 Dülmen (DE); MONSHEIMER, Sylvia, 45721 Haltern (DE)
(86) Internationale Anmeldenummer: PCT/EP2006/065253
(87) Internationale Veröffentlichungsnummer: WO 2007/060032

(56) Entgegenhaltungen:
- EP-A1- 0 329 350
- WO-A2-97/06205
- FR-A- 2 112 807
- GB-A- 2 286 147
- JP-A- 2005 125 782

## Beschreibung

Gegenstand der Erfindung ist ein Verfahren zum Schweißen von Formteilen mittels einer Folie, die einschichtig oder mehrschichtig sein kann, mit Hilfe von elektromagnetischer Strahlung.

Kunststoffformteile können mit den unterschiedlichsten Kunststoffschweißverfahren miteinander verbunden werden, beispielweise durch Hochfrequenzschweißen, Wärmeimpulsschweißen, Wärmekontaktschweißen, Heizkeilschweißen oder mit Hilfe elektromagnetischer Strahlung wie Laserlicht, IR oder Mikrowellenstrahlung. Beim Laserdurchstrahlschweißen wird üblicherweise ein lasertransparentes Fügeteil und ein laserabsorbierender Fügepartner verwendet. Die Laserstrahlung durchdringt den transmittierenden Körper und trifft auf den anliegenden absorbierenden Formkörper, der durch die lokale Erhitzung aufschmilzt. Allerdings sollte der Laserstrahl, der durch das transmittierende Fügeteil dringt, beim Fügen nicht allzu tief in den absorbierenden Fügepartner eindringen, sondern bereits in den Bereichen der Oberfläche zu einem Aufschmelzen des absorbierenden Formteils führen. Hierbei kommt es zu einer günstigen, lokalen Umsetzung des Laserstrahls innerhalb der Fügezone in Wärme. Die sich ausdehnende Schmelze berührt den transmittierenden Fügepartner und schmilzt diesen ebenfalls lokal auf. Anpressdruck unterstützt dabei das Zustandekommen der Fügeverbindung. Die Wärme wird gezielt eingebracht und kann nicht vorzeitig nach außen entweichen. Thermoplaste im ungefüllten Zustand sind für das Laserlicht bei Wellenlängen, die normalerweise zum Laserdurchstrahlschweißen verwendet werden, weitestgehend transparent. Ein Vorteil gegenüber den anderen Schweißverfahren ist das sehr gute optische Aussehen der Verbindung und die lokal begrenzte Erwärmung der Fügezone. Ähnliches gilt für das Schweißen mittels IR-Strahlung oder anderer elektromagnetischer Strahlung.

Bereits bekannt ist, dass man zwei Formteile, die lasertransparent sind, mit Hilfe einer zwischenliegenden laserabsorbierenden Folie miteinander verschweißen kann (WO 00/20157; WO 02/38677; F. Krause et al., "Mehr Freiheiten bei der Farbwahl", Kunststoffe 10/2003, S. 196-199). Nicht bekannt waren aber derartige Verfahren, bei denen zwei Formteile eingesetzt werden, die wegen Unverträglichkeit nicht direkt miteinander verschweißt werden können.

Weiterhin bekannt ist ein Verfahren zur Herstellung von laserverschweißten Verbundformteilen, bei dem zwei Kunststoffformteile A und B über ein weiteres Formteil C miteinander verschweißt werden, wobei letzteres eine Laserstrahlung transmittierende Materialschicht C1 und eine Laserstrahlung absorbierende Materialschicht C2 enthält. Die Schicht C2 überlappt mit den Formteilen A und B und wird in den Überlappungsbereichen mit diesen verbunden. Auf diese Weise erhält man jedoch nicht Verbundteile der erfindungsgemäß gewünschten Geometrie.

Die GB 2 286 147 A offenbart ein Verfahren zur Verschweißung zweier Formteile aus gleichartigem Material, zwischen denen sich eine infrarotabsorbierende Schicht befindet, mittels Einstrahlung von Infrarotlicht. In der WO 97/06205 A2 wird ein Verfahren zum Verschweißen zweier Polyolefin-Formteile beschrieben, die durch Infrarotstrahlung erhitzt und dann über eine dazwischen befindliche Polyolefinfolie miteinander in Kontakt gebracht werden. Ein ähnliches Verfahren wird in der EP 0 329 350 A1 beschrieben; hier wird mittels eines Heizelements erhitzt. Darüber hinaus beschreibt die FR 2 112 807 A, dass zwei Formteile aus vernetztem Polyethylen mittels einer zwischengelegten Polyethylenfolie unter Druck und gleichzeitiger externer Heizung miteinander verschweißt werden können. Schließlich ist aus der JP 2005125782 A bzw. der EP 1 669 186 A1 ein Verfahren zum Laserschweißen von zwei Formteilen aus unterschiedlichen Materialien mit Hilfe einer zwischengelegten Folie bekannt, die mit beiden Materialien verträglich ist.

Die der Erfindung zugrundeliegende Aufgabe bestand darin, Verbundteile aus zwei miteinander unverträglichen Formteilen mit Hilfe elektromagnetischer Strahlung herzustellen.

Diese Aufgabe wurde durch ein Verfahren mit den Merkmalen des Anspruchs 1 gelöst, das folgende Schritte enthält:
a) Bereitstellung eines Formteils A,
b) Bereitstellung eines Formteils B, dessen Material mit dem des Formteils A unverträglich ist, wobei mindestens eines der Formteile A und B durchlässig für elektromagnetische Strahlung ist,
c) Bereitstellung einer Folie C, deren Material der ersten Oberfläche mit dem Material des Formteils A und deren Material der zweiten Oberfläche mit dem Material des Formteils B verträglich ist, wobei entweder die Folie C oder ein damit in Kontakt stehender Oberflächenbereich Laserstrahlung absorbiert,
d) Kontaktieren der ersten Oberfläche der Folie C mit dem Formteil A und der zweiten Oberfläche der Folie C mit dem Formteil B,
e) anschließend Einstrahlen von Laserstrahlung unter Aufschmelzen der Folie C und
f) erkalten lassen der aufgeschmolzenen Bereiche,
wobei entweder die Folie C oder ein damit in Kontakt stehender Oberflächenbereich ein Additiv enthält, das Laserstrahlung absorbiert,
wobei die Folie C aus zwei, drei, vier, oder mehr Schichten besteht.

Die Absorption der elektromagnetischen Strahlung wird durch Zusatz eines absorbierenden Additivs bewirkt.

In einer möglichen Ausführungsform der Erfindung wird der Schritt d) so durchgeführt, dass die Folie C zwischen die Formteile A und B gelegt wird. Im Schritt e) wird dann die Verschweißung zwischen A und C sowie B und C gleichzeitig durchgeführt.

In einer weiteren möglichen Ausführungsform der Erfindung wird der Schritt d) so durchgeführt, dass die Folie C mit einem der Formteile A und B vorher verbunden wird, beispielsweise durch Laminieren. In einem Sonderfall hiervon wird das betreffende Formteil erst beim Kontakt mit der Folie gebildet. Dies kann durch Hinterspritzen einer in ein Werkzeug eingelegten Folie mit einer aufgeschmolzenen Formmasse unter Bildung des Formteils und gleichzeitiger Verbundbildung mit der Folie geschehen. Dieses Verbundteil wird anschließend mit dem anderen Formteil kontaktiert.

Andere mögliche Ausführungsformen der Erfindung sind beispielsweise folgende:
- das Additiv, das elektromagnetische Strahlung absorbiert, befindet sich in einem der Formteile A und B, entweder über das gesamte Formteil hinweg, in einer Oberflächenschicht oder direkt auf der Oberfläche. Beispielsweise kann dieses Formteil vollständig oder im Oberflächenbereich aus einer z. B. mit Ruß gefüllten Formmasse bestehen. Die Folie C enthält dann gegebenenfalls nur wenig oder kein Additiv;
- das Additiv, das elektromagnetische Strahlung absorbiert, befindet sich in der Folie. Diese Ausführungsform ist bevorzugt, da hier gegenüber der ebengenannten Ausführungsform noch besser gewährleistet ist, dass beim Verschweißen eine feste Verbindung der Folie zu beiden Formteilen entsteht;
- die Folie ist zweischichtig; das Material der einen Schicht ist auf eine Haftung zum Formteil A hin optimiert, während das Material der anderen Schicht auf eine Haftung zum Formteil B hin optimiert ist. Beide Folienschichten haften dabei fest aufeinander;
- die Folie ist dreischichtig, wobei das Material der ersten Außenschicht auf eine Haftung zum Formteil A hin optimiert ist und gegebenenfalls dem Material des Formteils A ähnlich oder mit ihm identisch ist; für das Material der zweiten Außenschicht und das Formteil B gilt sinngemäß das gleiche. Beide Außenschichten sind durch eine Haftvermittlerschicht miteinander verbunden. Auf diese Weise erhält man eine weitgehende Gestaltungsfreiheit bei der Materialpaarung. Falls erforderlich, kann die Folie auch vier oder mehr Schichten enthalten; der Herstellungsaufwand steigt dann jedoch an. Auch muss gewährleistet sein, dass die Folie nicht zu dick wird, um bei Bestrahlung über die gesamte Dicke aufzuschmelzen;
- das Additiv, das elektromagnetische Strahlung absorbiert, befindet sich in allen Folienschichten. So ist es denkbar, jedoch nicht nötig, z. B. bei einer Zwei- oder Dreischichtfolie jede Schicht aus einer Formmasse zu bilden, die ein derartiges Additiv enthält. Gegebenenfalls befinden sich in unterschiedlichen Bereichen unterschiedliche Additive, die in unterschiedlichen Wellenbereichen absorbieren. Dies ist insbesondere dann von Vorteil, wenn von einer Seite her unterschiedlich tief liegende Bereiche miteinander verschweißt werden sollen;
- das Additiv, das elektromagnetische Strahlung absorbiert, befindet sich in einer oder gegebenenfalls in mehreren, jedoch nicht in allen Schichten der Folie C. Bei einer nicht zu dicken Folie reicht eine einzige absorbierende Schicht aus, um bei Bestrahlung die Folie über den gesamten Dickenbereich aufschmelzen zu lassen. Bei einer Dreischichtfolie kann sich das Additiv demgemäss in einer der Außenschichten oder in der Mittelschicht oder beispielsweise in einer der Außenschichten sowie in der Mittelschicht befinden;
- das Verbundteil besitzt im einfachsten Fall den Aufbau A/C/B. Wenn sowohl A als auch B ausreichend transparent für die elektromagnetische Strahlung sind, kann die Einstrahlung wahlweise durch A oder durch B erfolgen;
- das Verbundteil enthält mehr als ein Formteil A, mehr als ein Formteil B und/oder mehr als eine Folie C. Die Formteile A bzw. die Formteile B bzw. die Folien C können hierbei in Form, Aufbau und Zusammensetzung unterschiedlich sein. Beispielsweise können erfindungsgemäß Verbundteile des Aufbaus A/C/B/C/A bzw. A¹/C¹/B/C²/A² hergestellt werden. In diesen Fällen wird eine zweifache Verschweißung durch Einstrahlung von beiden Seiten her durchgeführt.

Diese und andere denkbare Ausführungsformen können, soweit sinnvoll, miteinander kombiniert werden.

Als Formteile A und B kommen vor allem spritzgegossene, extrudierte, blasgeformte oder durch weitere Verfahren der Ur- oder Umformtechnik (Pressen, Prägen, Sintern, Gießen) hergestellte Formteile, einschließlich Folien und Halbzeuge (Tafeln, Rohre, Platten, Stäbe, etc.), in Frage. Diese Formteile können nach bekannten Verfahren hergestellt werden. Die Formteile können auch mehrkomponentig, z. B. mehrschichtig, aufgebaut sein. Mindestens eines dieser Formteile muss lasertransparent sein.

Die Formteile sind üblicherweise aus thermoplastischen Polymeren aufgebaut, können aber auch aus Duroplasten gebildet werden.

Als thermoplastische Polymere kommen alle dem Fachmann bekannten Thermoplaste in Betracht. Geeignete thermoplastische Polymere werden beispielsweise im Kunststoff-Taschenbuch, Hrsg. Saechtling, 25. Ausgabe, Hanser-Verlag, München, 1992, insbesondere Kapitel 4 sowie darin zitierte Verweise, und im Kunststoff-Handbuch, Hrsg. G. Becker und D. Braun, Bände 1 bis 11, Hanser-Verlag, München, 1966 bis 1996, beschrieben.

Exemplarisch seien als geeignete Thermoplaste genannt: Polyoxyalkylene, Polycarbonate (PC), Polyester wie Polybutylenterephthalat (PBT) oder Polyethylenterephthalat (PET), Polyolefine wie Polyethylen oder Polypropylen, Poly(meth)acrylate, Polyamide, vinylaromatische (Co)polymere wie Polystyrol, schlagzäh modifiziertes Polystyrol wie HI-PS, oder ASA-, ABS- oder AES-Polymerisate, Polyarylenether wie Polyphenylenether (PPE), Polysulfone, Polyurethane, Polylactide, halogenhaltige Polymerisate, imidgruppenhaltige Polymere, Celluloseester, Siliconpolymere und thermoplastische Elastomere. Es können auch Mischungen unterschiedlicher Thermoplaste als Materialien für die Kunststoffformteile eingesetzt werden. Bei diesen Mischungen kann es sich um ein- oder mehrphasige Polymerblends handeln.

Die miteinander zu verbindenden Formteile bestehen aus unterschiedlichen Thermoplasten bzw. Thermoplastblends.

Polyoxyalkylenhomo- oder -copolymerisate, insbesondere (Co)polyoxymethylene (POM), und Verfahren zu deren Herstellung sind dem Fachmann an sich bekannt und in der Literatur beschrieben. Geeignete Materialien sind im Handel beispielsweise unter der Markenbezeichnung Ultraform^{®} (BASF AG) erhältlich. Ganz allgemein weisen diese Polymere mindestens 50 Mol-% an wiederkehrenden Einheiten -CH₂0- in der Polymerhauptkette auf. Die Homopolymeren werden im allgemeinen durch Polymerisation von Formaldehyd oder Trioxan hergestellt, vorzugsweise in Gegenwart von geeigneten Katalysatoren. Bevorzugt sind Polyoxymethylencopolymere und Polyoxymethylenterpolymerisate. Die bevorzugten Polyoxymethylen(co)polymere haben Schmelzpunkte von mindestens 150 °C und Molekulargewichte (Gewichtsmittelwert) Mw im Bereich von 5.000 bis 200.000, vorzugsweise von 7.000 bis 150.000 g/mol. Endgruppenstabilisierte Polyoxymethylenpolymerisate, die an den Kettenenden C-C-Bindungen aufweisen, werden besonders bevorzugt.

Geeignete Polycarbonate sind an sich bekannt und sind z. B. gemäss DE-B-13 00 266 durch Grenzflächenpolykondensation oder gemäss DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen als Bisphenol A bezeichnet. Geeignete Polycarbonate sind im Handel unter der Markenbezeichnung Lexan^{®} (GE Plastics B. V., Holland) erhältlich.

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z. B. durch Halogen wie Chlor oder Brom oder durch C₁-C₄-Alkylgruppen wie Methyl-, Ethyl-, i- bzw. n-Propyl- oder n-, i- bzw. tert.-Butylgruppen. Die Polyester können durch Umsetzung von aromatischen Dicarbonsäuren, deren Estern oder anderer esterbildender Derivate hiervon mit aliphatischen Dihydroxyverbindungen in an sich bekannter Weise hergestellt werden. Als bevorzugte Dicarbonsäuren sind Naphthalindicarbonsäure, Terephthalsäure und
Isophthalsäure oder deren Mischungen zu nennen. Bis zu 30 Mol-% der aromatischen Dicarbonsäuren können durch aliphatische oder cycloaliphatische Dicarbonsäuren wie Adipinsäure, Azelainsäure, Sebacinsäure, Dodecandisäure und Cyclohexandicarbonsäure ersetzt werden. Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandimethylol und Neopentylglykol oder deren Mischungen bevorzugt. Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat (PET), Polyethylennaphthalat, Polybutylennaphthalat und Polybutylenterephthalat (PBT) bevorzugt.

Geeignete Polyolefine sind in erster Linie Polyethylen und Polypropylen sowie Copolymerisate auf der Basis von Ethylen oder Propylen, ggf. auch mit höheren α-Olefinen. Unter Polyolefinen sollen auch Ethylen-Propylen-Elastomere und Ethylen-Propylen-Terpolymere verstanden werden.

Unter den Poly(meth)acrylaten sind insbesondere Polymethylmethacrylat (PMMA) sowie Copolymere auf der Basis von Methylmethacrylat mit bis zu 40 Gew.-% weiterer copolymerisierbarer Monomerer, wie n-Butylacrylat, t-Butylacrylat oder 2-Ethylhexylacrylat, zu nennen, wie sie beispielsweise unter den Bezeichnungen Lucryl^{®} (BASF AG) oder Plexiglas^{®} (Röhm GmbH) erhältlich sind. Im Sinne der Erfindung sind hierunter auch schlagzähmodifizierte Poly(meth)acrylate sowie Mischungen aus Poly(meth)acrylaten und SAN-Polymerisaten, die mit Polyacrylatkautschuken schlagzähmodifiziert sind (z. B. das Handelsprodukt Terlux^{®} der BASF AG), zu verstehen.

Unter Polyamiden im Sinne der vorliegenden Erfindung sollen alle bekannten Polyamide, einschließlich Polyetheramiden und Polyetherblockamiden, sowie deren Blends verstanden werden. Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden. Die Polyamide können auch vollaromatisch oder teilaromatisch sein; letztere werden üblicherweise als PPA bezeichnet.

Als Dicarbonsäuren sind Alkandicarbonsäuren mit 6 bis 14, insbesondere 6 bis 12 Kohlenstoffatomen und aromatische Dicarbonsäuren einsetzbar. Hier seien Adipinsäure, Azelainsäure, Sebacinsäure, Dodecandisäure (= Decandicarbonsäure) und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-amino-cyclohexyl)methan, 2,2-Di-(4-aminophenyl)-propan oder 2,2-Di-(4-aminocyclohexyl)propan.

Bevorzugte Polyamide sind Polyhexamethylenadipinsäureamid (PA 66), Polyhexamethylensebacinsäureamid (PA 610), Polyhexamethylendecandicarbonsäureamid (PA 612), Polycaprolactam (PA 6), Copolyamide 6/66, insbesondere mit einem Anteil von 5 bis 95 Gew.-% an Caprolactam-Einheiten sowie Polylaurinlactam (PA 12) und PA 11, darüber hinaus auch Copolyamide auf Basis von Caprolactam, Terephthalsäure und Hexamethylendiamin oder auf Basis von Terephthalsäure, Adipinsäure und Hexamethylendiamin.

Außerdem seien auch noch Polyamide erwähnt, die z. B. durch Kondensation von 1,4-Diaminobutan mit Adipinsäure unter erhöhter Temperatur erhältlich sind (PA 46). Herstellungsverfahren für Polyamide dieser Struktur sind z. B. in EP-A 0 038 094, EP-A 0 038 582 und EP-A 0 039 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Die nachfolgende nicht abschließende Aufstellung enthält die genannten sowie weitere Polyamide im Sinne der Erfindung (in Klammern sind die Monomeren angegeben): PA46 (Tetramethylendiamin, Adipinsäure), PA66 (Hexamethylendiamin, Adipinsäure), PA69 (Hexamethylendiamin, Azelainsäure), PA610 (Hexamethylendiamin, Sebacinsäure), PA612 (Hexamethylendiamin, Decandicarbonsäure), PA613 (Hexamethylendiamin, Undecandicarbonsäure), PA614 (Hexamethylendiamin, Dodecandicarbonsäure), PA1212 (1,12-Dodecandiamin, Decandicarbonsäure), PA1313 (1,13-Diaminotridecan, Undecandicarbonsäure), PA MXD6 (m-Xylylendiamin, Adipinsäure), PA TMDT (Trimethylhexamethylendiamin, Terephthalsäure), PA 4 (Pyrrolidon), PA 6 (ε-Caprolactam), PA 7 (Ethanolactam), PA 8 (Capryllactam), PA 9 (9-Aminopelargonsäure), PA 11 (11-Aminoundecansäure), PA 12 (Laurinlactam). Diese Polyamide und ihre Herstellung sind bekannt. Einzelheiten zu ihrer Herstellung findet der Fachmann in Ullmanns Encyklopädie der Technischen Chemie, 4. Auflage, Bd. 19, S. 39-54, Verlag Chemie, Weinheim 1980, sowie Ullmanns Encyclopedia of Industrial Chemistry, Vol. A21, S. 179-206, VCH Verlag, Weinheim 1992, sowie Stoeckhert, Kunststofflexikon, 8. Auflage, S. 425-428, Hanser Verlag München 1992 (Stichwort "Polyamide" und folgende).

Weitere geeignete thermoplastische Materialien stellen vinylaromatische (Co)polymere dar. Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000 g/mol.

Nur stellvertretend seien hier vinylaromatische (Co)polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%) können auch Comonomere wie (Meth)acrylnitril oder(Meth)acrylsäureester am Aufbau beteiligt sein. Besonders bevorzugte vinylaromatische (Co)polymere sind Polystyrol, Styrol-Acrylnitril-Copolymere (SAN) und schlagzäh modifiziertes Polystyrol (HIPS = High Impact Polystyrene). Es versteht sich, dass auch Mischungen dieser Polymeren eingesetzt werden können. Die Herstellung kann nach dem in der EP-A-0 302 485 beschriebenen Verfahren erfolgen.

Weiterhin sind ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol) besonderes bevorzugt. Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im allgemeinen auf ein Styrol/Acrylnitril-Polymerisat (SAN) zurückgegriffen. Bevorzugt werden Pfropfpolymerisate verwendet, die als Kautschuk einen Dienkautschuk auf Basis von Dienen wie z. B. Butadien oder Isopren (ABS), einen Alkylacrylatkautschuk auf Basis von Alkylestern der Acrylsäure wie n-Butylacrylat und 2-Ethylhexylacrylat, einen EPDM-Kautschuk auf Basis von Ethylen, Propylen und einem Dien oder Mischungen dieser Kautschuke bzw. Kautschukmonomeren enthalten.

Die Herstellung von geeigneten ABS-Polymerisaten ist z. B. in DE-A 100 26 858 oder in DE-A 197 28 629 eingehend beschrieben. Für die Herstellung von ASA-Polymerisaten kann z. B. auf die EP-A 0 099 532 zurückgegriffen werden. Angaben über die Herstellung von AES-Polymerisaten sind beispielsweise in der US 3,055,859 oder in der US 4,224,419 offenbart.

Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Biphenylen, Terphenylen, 1,5-Naphthylen, 1,6-Naphthylen, 1,5-Anthrylen, 9,10-Anthrylen oder 2,6-Anthrylen. Hiervon werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Polyphenylenether sind unter der Bezeichnung Noryl^{®} (GE Plastics B. V., Holland) kommerziell erhältlich.

Die Polyarylenether sind an sich bekannt oder können nach an sich bekannten Methoden hergestellt werden.

Bevorzugte Verfahrensbedingungen zur Synthese von Polyarylenethersulfonen oder -ketonen sind beispielsweise in der EP-A 0 113 112 und der EP-A 0 135 130 beschrieben. Geeignete Polyphenylenethersulfone sind z. B. unter der Bezeichnung Ultrason^{®} E (BASF AG), geeignete Polyphenylenetherketone unter der Bezeichnung Victrex^{®} im Handel erhältlich.

Des weiteren sind Polyurethane, Polyisocyanurate und Polyharnstoffe geeignete Materialien für die Herstellung der Kunststoffformteile. Weiche, halbharte oder harte, thermoplastische oder vernetzte Polyisocyanat-Polyadditionsprodukte, beispielsweise Polyurethane, Polyisocyanurate und/oder Polyharnstoffe, sind allgemein bekannt. Ihre Herstellung ist vielfältig beschrieben und erfolgt üblicherweise durch Umsetzung von Isocyanaten mit gegenüber Isocyanaten reaktiven Verbindungen bei allgemein bekannten Bedingungen. Bevorzugt wird die Umsetzung in Gegenwart von Katalysatoren und/oder Hilfsstoffen durchgeführt.

Als Isocyanate kommen die an sich bekannten aromatischen, arylaliphatischen, aliphatischen und/oder cycloaliphatischen organischen Isocyanate, bevorzugt Diisocyanate, in Frage.

Als gegenüber Isocyanaten reaktive Verbindungen können beispielsweise allgemein bekannte Verbindungen mit einem Molekulargewicht von 60 bis 10.000 g/mol und einer Funktionalität gegenüber Isocyanaten von 1 bis 8, bevorzugt 2 bis 6 eingesetzt werden (im Falle von thermoplastischen Polyurethanen Funktionalität ca. 2), beispielsweise Polyole wie Polyetherpolyole, Polyesterpolyole und Polyetherpolyesterpolyole mit einem Molekulargewicht von 500 bis 10.000 g/mol und/oder Diole, Triole und/oder Polyole mit Molekulargewichten kleiner als 500 g/mol.

Polylactide, also Polymere der Milchsäure, sind an sich bekannt und können nach an sich bekannten Verfahren hergestellt werden.

Neben Polylactid können auch Co-oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z. B. mehrfunktionelle Säuren oder Alkohole dienen.

Als geeignete halogenhaltige Polymerisate sind beispielsweise Polymerisate des Vinylchlorids zu nennen, insbesondere Polyvinylchlorid (PVC) wie Hart-PVC und Weich-PVC und Copolymerisate des Vinylchlorids wie PVC-U-Formmassen.

Weiterhin kommen fluorhaltige Polymere in Betracht, insbesondere Polytetrafluorethylen (PTFE), Tetrafluorethylen-Perfluorpropylen-Copolymere (FEP), Copolymere des Tetrafluorethylens mit Perfluoralkylvinylether, Ethylen-Tetrafluorethylen-Copolymere (ETFE), Polyvinylidenfluorid (PVDF), Polyvinylfluorid (PVF), Polychlortrifluorethylen (PCTFE), und Ethylen-Chlortrifluorethylen-Copolymere (ECTFE).

Imidgruppenhaltige Polymere sind insbesondere Polyimide, Polyetherimide und Polyamidimide.

Geeignete Celluloseester sind etwa Celluloseacetat, Celluloseacetobutyrat und Cellulosepropionat.

Daneben kommen auch Siliconpolymere als Thermoplaste in Betracht. Geeignet sind insbesondere Siliconkautschuke. Dabei handelt es sich üblicherweise um Polyorganosiloxane, die zu Vernetzungsreaktionen fähige Gruppen aufweisen. Derartige Polymere werden beispielsweise in Römpp Chemie Lexikon, CD-ROM-Version 1.0, Thieme Verlag Stuttgart 1995, beschrieben.

Schließlich kann auch die Verbindungsklasse der thermoplastischen Elastomere (TPE) verwendet werden. TPE lassen sich wie Thermoplaste verarbeiten, haben jedoch kautschukelastische Eigenschaften. Geeignet sind TPE-Blockcopolymere, TPE-Pfropfcopolymere und segmentierte TPE-Copolymere aus zwei oder mehr Monomerbausteinen. Besonders geeignete TPE sind thermoplastische Polyurethan-Elastomere (TPE-U oder TPU), Styrol-Oligoblock-Copolymere (TPE-S) wie SBS (Styrol-Butadien-Styrol-Blockcopolymer) und SEBS (Styrol-Ethylen-Butylen-Styrol-Blockcopolymer, erhältlich durch Hydrieren von SBS), thermoplastische Polyolefin-Elastomere (TPE-O), thermoplastische Polyester-Elastomere (TPE-E), thermoplastische Polyamid-Elastomere (TPE-A) und insbesondere thermoplastische Vulkanisate (TPE-V). Einzelheiten zu TPE findet der Fachmann in G. Holden et al., Thermoplastic Elastomers, 2. Auflage, Hanser Verlag, München 1996.

Die Formteile A und B können darüber hinaus übliche Zusatzstoffe und Verarbeitungshilfsmittel enthalten.

Geeignete Zusatzstoffe und Verarbeitungshilfsmittel sind z. B. Gleit- oder Entformungsmittel, Kautschuke, Antioxidantien, Stabilisatoren gegen Lichteinwirkung, Antistatika, Flammschutzmittel oder faser- bzw. pulverförmige Füll- oder Verstärkungsmittel sowie andere Zusatzstoffe oder deren Mischungen.

Geeignete Gleit- und Entformungsmittel sind z. B. Stearinsäure, Stearylalkohol, Stearinsäureester oder -amide, Siliconöle, Metallstearate, Montanwachse und Wachse auf Basis von Polyethylen und Polypropylen.

Geeignete Antioxidantien (Wärmestabilisatoren) sind etwa sterisch gehinderte Phenole, Hydrochinone, Arylamine, Phosphite, verschiedene substituierte Vertreter dieser Gruppe sowie deren Mischungen.

Geeignete Stabilisatoren gegen Lichteinwirkung sind z. B. verschiedene substituierte Resorcine, Salicylate, Benzotriazole, Benzophenone und HALS (Hindered Amine Light Stabilizers).

Geeignete Antistatika sind beispielsweise Aminderivate wie N,N-Bis(hydroxyalkyl)alkylamine oder -alkylenamine, Polyethylenglycolester oder Glycerinmono- und -distearate sowie deren Mischungen.

Geeignete Flammschutzmittel sind z. B. die dem Fachmann bekannten halogenhaltigen Verbindungen, allein oder zusammen mit Antimontrioxid, oder phosphorhaltige Verbindungen, Magnesiumhydroxid, roter Phosphor sowie andere gebräuchliche Verbindungen oder deren Mischungen. Darunter fallen z. B. die in der DE-A 196 32 675 oder die in der Encyclopedia of Chemical Technology, Hrsg. R. Kirk und D. Othmer, Vol. 10, 3. Aufl., Wiley, New York, 1980, Seiten 340 bis 420, offenbarten Phosphorverbindungen wie Phosphate, z. B. Triarylphosphate wie Triskresylphosphat, Phosphite, z. B. Triarylphosphite, oder Phosphonite. Als Phosphonite werden in der Regel Bis(2,4-di-tert.-butylphenyl)-phenylphosphonit, Tris(2,4-di-tert.butylphenyl)-phosphonit, Tetrakis(2,4-di-tert.-butyl-6-methylphenyl)-4,4'-biphenylylen-diphosphonit, Tetrakis(2,4-di-tert.-butylphenyl)-4,4'-biphenylylendiphosphonit, Tetrakis(2,4-dimethylphenyl)-1,4-phenylylendiphosphonit, Tetrakis(2,4-di-tert.-butylphenyl)-1,6-hexylylendiphosphonit und/oder Tetrakis(3,5-dimethyl-4-hydroxyphenyl)-4,4'-biphenylylen-diphosphonit bzw. Tetrakis(3,5-di-tert.-butyl-4-hydroxyphenyl)-4,4'-biphenylylen-diphosphonit verwendet.

Des weiteren geeignet sind anorganische Flammschutzmittel auf der Basis von Hydroxiden oder Carbonaten, insbesondere des Magnesiums, anorganische und organische Borverbindungen wie Borsäure, Natriumborat, Boroxid, Natriumtetraphenylborat und Tribenzylborat, stickstoffhaltige Flammschutzmittel wie Iminophosphorane, Melamincyanurat und Ammoniumpolyphosphate sowie Melaminphosphat (s. a. Encyclopedia of Chemical Technology, ibid.). Als Flammschutzmittel kommen weiterhin auch Gemische mit Antitropfmitteln wie Teflon oder hochmolekulares Polystyrol in Frage.

Als Beispiele für faserförmige bzw. pulverförmige Füll- und Verstärkungsstoffe seien Kohlenstoff- oder Glasfasern in Form von Glasgeweben, Glasmatten oder Glasseidenrovings, Schnittglas sowie Glaskugeln genannt, besonders bevorzugt Glasfasern. Die verwendeten Glasfasern können aus E-, A- oder C-Glas sein und sind vorzugsweise mit einer Schlichte, z. B. auf Epoxyharz-, Silan-, Aminosilan- oder Polyurethanbasis und einem Haftvermittler auf der Basis funktionalisierter Silane ausgerüstet. Die Einarbeitung der Glasfasern kann sowohl in Form von Kurzglasfasern als auch in Form von Endlossträngen (Rovings) erfolgen.

Als teilchenförmige Füllstoffe eignen sich z. B. amorphe Kieselsäure, Whisker, Aluminiumoxidfasern, Magnesiumcarbonat (Kreide), gepulverter Quarz, Glimmer, Mica, Bentonite, Talkum, Feldspat oder insbesondere Calciumsilikate wie Wollastonit und Kaolin.

Die faser-, pulver- bzw. teilchenförmigen Füll- und Verstärkungsstoffe werden üblicherweise in Mengen von 1 bis 60 und bevorzugt 10 bis 50 Gew.-%, bezogen auf das Formteil, verwendet.

Des weiteren können die Formteile A bzw. B Farbmittel enthalten. Demgemäss können die Formteile A und B gleich- oder verschiedenfarbig sein.

Die Herstellung der Formteile aus den Polymerformmassen, den Zusatzstoffen, Verarbeitungshilfsmitteln und/oder Farbmitteln kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung aufgeschmolzen und homogenisiert.

Bevorzugt werden die Komponenten, gegebenenfalls mit den erwähnten Zusatzstoffen, Verarbeitungshilfsmitteln und/oder Farbmitteln, in einem Extruder oder einer anderen Mischvorrichtung bei Temperaturen von 100 bis 320 °C unter Aufschmelzen des thermoplastischen Polymeren vermischt und ausgetragen. Die Verwendung eines Extruders ist besonders bevorzugt, insbesondere eines gleichsinnig drehenden, dichtkämmenden Zweischneckenextruders.

Alternativ hierzu kann eines der beiden Formteile aus einem Werkstoff bestehen, der kein Kunststoff ist, beispielsweise aus Holz, Metall (z. B. Aluminium, Magnesium, Stahl), Keramik oder Stein. Das andere Formteil ist dann transparent für elektromagnetische Strahlung.

Das Material des Formteils A ist mit dem des Formteils B unverträglich. Dies hat zur Folge, dass sich beide Formteile nicht direkt verschweißen lassen, da entweder keine Haftung erzielt wird oder die Haftung nicht ausreicht.

Die erzielbare Haftung ist dann nicht ausreichend, wenn beim fachmännischen Verschweißen eines für elektromagnetische Strahlung durchlässigen Formteils A mit einem Formteil B, das eine wirksame Menge eines elektromagnetische Strahlung absorbierenden Additivs enthält, durch Einstrahlen von elektromagnetischer Strahlung ein Formteil erhalten wird, bei dem die zum Bruch der Verschweißung erforderliche Zugspannung (gemessen im Zugversuch gemäß DIN EN ISO 527) unter 2 N/mm², bevorzugt maximal 1,5 N/mm² und besonders bevorzugt maximal 1 N/mm² beträgt.

Beim Material für die Folie C kann grundsätzlich auf die vorgenannten Thermoplaste bzw. Formmassen zurückgegriffen werden. Hinsichtlich der Materialwahl kann der Fachmann in weitem Umfang auf Materialpaarungen, die als verträglich bekannt sind, zurückgreifen.

Im allgemeinen ist die Folie maximal 500 µm, maximal 400 µm, maximal 300 µm, maximal 250 µm bzw. maximal 200 µm dick, während die Mindestdicke bei 10 µm, 15 µm, 20 µm, 25 µm bzw. 30 µm liegt.

Typische Beispiele für geeignete Materialkombinationen sind folgende:
a) Nicht erfindungsgemäß: Man verbindet ein Formteil A aus einer handelsüblichen Polyamidformmasse (z. B. auf Basis von PA6, PA66, PA610, PA612, PA1010, PA11, PA12 oder einem der weiter oben genannten Polyamide) über eine Folie, die z. B. aus einer Formmasse auf Basis eines mit Maleinsäureanhydrid gepfropften Polypropylens (etwa Admer^{®} QB 520E) besteht, die mit z. B. Ruß als Additiv versetzt ist, mit einem Formteil B aus einer handelsüblichen Polypropylenformmasse. Die erzielte Haftung ist akzeptabel.
b) Eine festere Verbindung der unter a) genannte Formteile A und B gelingt dann, wenn man eine zwischenliegende Zweischichtfolie verwendet, deren zum Formteil A benachbarte Schicht aus einer mit z.B. Ruß als Additiv versetzten Polyamidformmasse besteht (am besten auf Basis des gleichen Polyamids wie im Formteil A), während die zum Formteil B benachbarte Schicht aus einer Formmasse auf Basis eines mit Maleinsäureanhydrid gepfropften Polypropylens (etwa Admer^{®} QB 520E) besteht.
c) Einen zusätzlichen Festigkeitsgewinn ausgehend von b) erzielt man dann, wenn man eine zwischenliegende Dreischichtfolie verwendet, deren zum Formteil A benachbarte Schicht aus einer Polyamidformmasse besteht (am besten auf Basis des gleichen Polyamids wie im Formteil A), während die zum Formteil B benachbarte Schicht aus einer handelsüblichen Polypropylenformmasse besteht; beide Schichten werden durch eine dazwischenliegende Haftvermittlerschicht auf Basis eines mit Maleinsäureanhydrid gepfropften Polypropylens (etwa Admer^{®} QB 520E) verbunden. Das Additiv, z. B. Ruß, kann wahlweise in der Polyamidschicht, in der Haftvermittlerschicht und/oder in der Polypropylenschicht enthalten sein.

Die Dreischichtfolie kann - genauso wie die unter b) verwendete Zweischichtfolie - auf bekannte Weise hergestellt werden, beispielweise durch Coextrusion.
d) Ein weiteres Beispiel ist die Verschweißung eines Formteils aus einer PA12-Formmasse, z. B. eines Deckels, mit einem Formteil aus einer PBT-Formmasse, z. B. eines Gehäuses, mit Hilfe einer zwischengelegten Zweischichtfolie, bei der die dem PBT-Formteil benachbarte Schicht (Dicke z. B. 50 µm) aus einem Blend aus PA12, PBT und Verträglichkeitsvermittler (etwa gemäß EP-A-0 509 211 oder EP-A-1 065 048) und die dem PA12-Formteil benachbarte Schicht (Dicke z. B. 50 µm) aus einer PA12-Formmasse besteht. Das Additiv, z. B. Ruß, kann wahlweise in der einen oder der anderen Schicht enthalten sein.

Das elektromagnetische Strahlung absorbierende Additiv kann Ruß sein. Weitere geeignete absorbierende Additive sind Knochenkohle, Graphit, andere Kohlenstoffpartikel, Kupferhydroxidphosphat (KHP), Farbstoffe, Pigmente oder Metallpulver. Gut geeignet sind auch Interferenzpigmente, wie sie z. B. in der EP-A-0 797 511 beschrieben werden; entsprechende Produkte werden unter dem Handelsnamen Iriodin® vertrieben. Ebenfalls gut geeignet sind auch die in der WO 00/20157 und der WO 02/38677 (z. B. ClearWeld^{®}) beschriebenen Additive.

Daneben eignen sich ebenfalls: Glimmer bzw. Glimmerpigmente, Titandioxid, Kaolin, Antimon(III)oxid, Metallpigmente, Pigmente auf der Basis von Bismutoxichlorid (z. B. Serie Biflair von Merck, Hochglanzpigment), Indiumzinnoxid (Nano ITO-Pulver, von Nanogate Technologies GmbH oder AdNano^{tm} ITO der Degussa), AdNano^{tm} Zinkoxid (Degussa), Lanthanhexachlorid sowie kommerziell erhältliche Flammschutzmittel, welche Melamincyanurat oder Phosphor, bevorzugt Phosphate, Phosphite, Phosphonite oder elementaren (roter) Phosphor, aufweisen.

Wenn eine Störung der Eigenfarbe vermieden werden soll, weist der Absorber bevorzugt Interferenzpigmente, besonders bevorzugt aus der Iriodin LS-Reihe von Merck, oder ClearWeld^{®}, aus.

Der Ruß kann nach dem Furnacerußverfahren, dem Gasrußverfahren oder dem Flammrußverfahren hergestellt werden, vorzugsweise nach dem Furnacerußverfahren. Die Primärteilchengröße liegt zwischen 10 und 100 nm, vorzugsweise zwischen 20 und 60 nm, die Kornverteilung kann eng oder breit sein. Die BET-Oberfläche nach DIN 53601 liegt zwischen 10 und 600 m²/g, bevorzugt zwischen 70 und 400 m²/g. Die Rußpartikel können zur Einstellung von Oberflächenfunktionalitäten oxidativ nachbehandelt sein. Sie können hydrophob (beispielsweise Printex 55 oder Flammruß 101 der Degussa) oder hydrophil (beispielsweise Farbruß FW20 oder Printex 150 T der Degussa) eingestellt sein. Sie können hochstrukturiert oder niederstrukturiert sein; damit wird ein Aggregationsgrad der Primärteilchen beschrieben. Durch die Verwendung spezieller Leitfähigkeitsruße kann die elektrische Leitfähigkeit der aus dem erfindungsgemäßen Pulver hergestellten Bauteile eingestellt werden. Durch die Verwendung von geperlten Rußen kann eine bessere Dispergierbarkeit sowohl bei den nassen als auch bei den trockenen Mischverfahren genutzt werden. Auch die Verwendung von Rußdispersionen kann von Vorteil sein.

Knochenkohle ist ein mineralisches Schwarzpigment, welches elementaren Kohlenstoff enthält. Sie besteht zu 70 bis 90 % aus Calciumphosphat und zu 30 bis 10 % aus Kohlenstoff. Die Dichte liegt typischerweise zwischen 2,3 und 2,8 g/ml.

Der Absorber kann auch eine Mischung von organischen und/oder anorganischen Pigmenten, Flammschutzmitteln, oder anderen Farbmitteln enthalten, die jedes für sich in den Wellenlängen zwischen 100 und 3.000 nm nicht oder schlecht absorbieren, in der Kombination jedoch ausreichend gut zur Verwendung im erfindungsgemäßen Verfahren die eingetragene elektromagnetische Energie absorbieren.

Die Konzentration des absorbierenden Additivs in der Folie bzw. Folienschicht beträgt üblicherweise 0,05 bis 20 Gew.-%, bevorzugt 0,1 bis 5 Gew.-% und besonders bevorzugt 0,2 bis 1,5 Gew.-%.

Das Verschweißen unter Einstrahlung der elektromagnetischen Strahlung wird entsprechend dem Stand der Technik empfehlenswerterweise unter Anpressdruck durchgeführt.

Die elektromagnetische Strahlung ist hinsichtlich des Frequenzbereichs nicht begrenzt. Erfindungsgemäß handelt es sich um Laserstrahlung.

Die beim erfindungsgemäßen Verfahren eingesetzte Laserstrahlung hat im allgemeinen eine Wellenlänge im Bereich von 150 bis 11.000, vorzugsweise im Bereich von 700 bis 2.000 und besonders bevorzugt im Bereich von 800 bis 1.100 nm.

Prinzipiell sind alle üblichen Laser geeignet, beispielsweise Gaslaser und Festkörperlaser. Gaslaser sind z. B. (in Klammern ist die typische Wellenlänge der emittierten Strahlung angegeben): CO₂-Laser (10600 nm), Argon-Gaslaser (488 nm und 514,5 nm), Helium-Neon-Gaslaser (543 nm, 632,8 nm, 1150 nm), Krypton-Gaslaser (330 bis 360 nm, 420 bis 800 nm), Wasserstoff-Gaslaser (2600 bis 3000 nm), Stickstoff-Gaslaser (337 nm); Festkörperlaser sind z. B. (in Klammern die typische Wellenlänge der emittierten Strahlung): Nd:YAG-Laser(Nd³⁺:Y₃Al₅O₁₂) (1064 nm), Hochleistungsdioden-Laser (800 bis 1000 nm), Rubinlaser (694 nm), F₂-Excimerlaser (157 nm), ArF-Excimerlaser (193 nm), KrCl-Excimerlaser (222 nm), KrF-Excimerlaser (248 nm), XeCl-Excimerlaser (308 nm), XeF-Excimerlaser (351 nm) sowie frequenzvervielfachte Nd:YAG-Laser mit Wellenlängen von 532 nm (frequenzverdoppelt), 355 nm (frequenzverdreifacht) oder 266 nm (frequenzvervierfacht).

Die verwendeten Laser werden üblicherweise bei Leistungen von 1 bis 200, bevorzugt 5 bis 100 und insbesondere 10 bis 50 Watt betrieben.

Die Energiedichten der eingesetzten Laser werden in der Literatur als sogenannte "Streckenenergien" angegeben und liegen bei der vorliegenden Erfindung im allgemeinen im Bereich von 0,1 bis 50 J/mm. Die tatsächliche Energiedichte ist definiert als eingebrachte Leistung/erzeugte Schweißfläche. Dieser Wert ist dem Verhältnis Streckenenergie/Breite der erzeugten Schweißnaht gleichzusetzen. Die tatsächlichen Energiedichten der verwendeten Laser betragen üblicherweise 0,01 bis 25 J/mm².

Die zu wählende Energiedichte hängt neben den Reflektionseigenschaften des transparenten Körpers u. a. davon ab, ob die zu verbindenden Kunststoffformteile Füll- oder Verstärkungsstoffe oder andere stark laserabsorbierende oder -streuende Stoffe enthalten. Für Polymere, die eine geringe Reflektion besitzen und keine Füll- oder Verstärkungsstoffe enthalten, betragen die Energiedichten üblicherweise 1 bis 20, insbesondere 3 bis 10 J/mm. Für Polymere, die Füll- oder Verstärkungsstoffe enthalten, betragen sie üblicherweise 3 bis 50, insbesondere 5 bis 20 J/mm.

Entsprechende Laser, die im erfindungsgemäßen Verfahren eingesetzt werden können, sind kommerziell erhältlich.

Besonders bevorzugte Laser emittieren im kurzwelligen Infrarot-Bereich. Solche besonders bevorzugten Laser sind Festkörperlaser, insbesondere der Nd:YAG-Laser (1064 nm) und Hochleistungsdioden-Laser (800 bis 1.000 nm).

Die Laserstrahlung kann ortsfest (unbewegt) sein und die zu verbindenden Formteile können an der Laserquelle vorbei bewegt werden. Ebenso können die Formteile ortsfest (ruhend) sein und die Laserquelle kann an den Formteilen vorbei bewegt werden.

Dabei kann die Laserquelle bewegt werden, indem man den Laser als ganzes, nur den Laserkopf, oder nur die aus dem Laser austretende Laserstrahlung über optische oder optischmechanische Vorrichtungen bewegt. Solche Vorrichtungen können z. B. Linsen, Spiegel, lichtleitende Kabel, insbesondere Glasfaserkabel, und andere in der Lasertechnologie gebräuchliche Vorrichtungen, sowie Kombinationen der genannten Vorrichtungen, sein. Es ist auch möglich, dass sich sowohl Laserquelle als auch Formteile bewegen.

Die relative Bewegungsgeschwindigkeit (nachfolgend kurz "Geschwindigkeit") der Laserquelle zu den Formteilen beträgt z. B. beim Konturschweißen üblicherweise 1 bis 10.000 mm/s, bevorzugt 5 bis 5.000 und insbesondere 50 bis 1000 mm/s.

Bezüglich der Laserleistung und der Geschwindigkeit ergeben sich die genannten Ober- und Untergrenzen unter anderem dadurch, dass bei zu hoher Laserleistung bzw. zu geringer Geschwindigkeit sich das Polymermaterial an der zu verbindenden Stelle der Formteile zersetzt (thermische Schädigung), und dass bei zu geringer Laserleistung bzw. zu hoher Geschwindigkeit keine qualitativ hochwertige (also dauerhaft feste und dichte) Schweißnaht mehr möglich ist, da die zum Schweißen erforderlichen Diffusionsvorgänge eine bestimmte Temperatureinwirkzeit erfordern.

Es hat sich in manchen Fällen als vorteilhaft erwiesen, die zu verbindenden Formteile vor dem Laserschweißen zu trocknen, um Schweißnahtdefekte durch verdampfendes Wasser zu vermeiden.

Das Laserdurchstrahlschweißen kann in verschiedenen Ausführungsformen durchgeführt werden. Die wichtigsten werden beispielhaft genannt: das Konturschweißen ist ein sequenzieller Schweißprozess, bei dem der Laserstrahl entlang einer frei programmierbaren Nahtkontur geführt oder das Bauteil relativ zum fest montierten Laser bewegt wird. Die Schweißnahtbreite lässt sich je nach Lasertyp, Optik und Streuung durch das lasertransparente Formteil stark variieren und liegt typischerweise im Bereich von 0,6 bis 5 mm.

Simultanschweißen: dabei wird die linienförmig emittierte Strahlung einzelner Hochleistungsdioden entlang der zu schweißenden Nahtkontur angeordnet. Das Aufschmelzen und Verschweißen der gesamten Kontur erfolgt somit zeitgleich (simultan).

Quasi-Simultan- oder Scan-(Abtast-)Schweißen: ist eine Kombination aus Kontur- und Simultanschweißen. Der Laserstrahl wird mittels galvanometrischer Spiegel (Scanner) mit hoher Geschwindigkeit entlang der Schweißnahtkontur hin und her geführt. Dadurch erwärmt sich der zu verbindende Bereich allmählich und schmilzt komplett auf.

Maskenschweißen: dabei wird ein linienförmiger Laserstrahl quer über die zu verbindenden Teile bewegt. Durch eine zwischen Laser und Bauteil befindliche Maske wird die Strahlung gezielt abgeschattet und trifft nur dort auf die Bauteile, wo sie geschweißt werden sollen. Feinste Strukturen in der Maske erlauben hohe Auflösungen und Schweißnahtbreiten von nur 10µm.

Die nach dem erfindungsgemäßen Verfahren erhaltenen Verbundformteile sind insbesondere Gehäuse, Behälter, wie beispielsweise Kraftstofftanks, Verpackungen, Gebrauchsgegenstände, Bauelemente, Befestigungselemente etc., von z. B. Haushalts- und Elektrogeräten oder für den Innen- und Außenbereich von Automobilen, Flugzeugen oder Schiffen.

Die Verbundteile zeichnen sich u. a. dadurch aus, dass die Schweißnähte flüssigkeits- und gasundurchlässig sind.

Das erfindungsgemäße Verfahren eignet sich insbesondere auch zur Herstellung zusammengesetzter Formteile, die weitere Bauteile enthalten. Solche weiteren Bauteile können z. B. mechanische (einschließlich feinmechanische), elektrische, elektronische, optische, akustische oder sonstige Bauteile aus Metallen, Gläsern, Keramiken, Polymeren, Gummi oder anderen Werkstoffen sein.

Die erfindungsgemäß hergestellten Verbundteile sind ebenfalls Gegenstand der Erfindung.

Die erzielte Schweißfestigkeit kann mittels Zugversuch gemäß DIN EN ISO 527 entweder direkt am Formteil oder an einer herausgesägten Partie bestimmt werden. Die zum Bruch der Verschweißung erforderliche Zugspannung beträgt vorzugsweise mindestens 2 N/mm² und bevorzugt mindestens 3 N/mm², mindestens 4 N/mm², mindestens 5 N/mm², mindestens 6 N/mm², mindestens 7 N/mm², mindestens 8 N/mm², mindestens 9 N/mm² bzw. mindestens 10 N/mm².

## Patentansprüche

1. Verfahren zur Herstellung eines Verbundteils aus mindestens zwei miteinander nicht direkt verschweißbaren Formteilen, die aus unterschiedlichen Thermoplasten bzw. Thermoplastblends bestehen, das folgende Schritte enthält:
a) Bereitstellung eines Formteils A,
b) Bereitstellung eines Formteils B, dessen Material mit dem des Formteils A unverträglich ist,
c) Bereitstellung einer Folie C, deren Material der ersten Oberfläche mit dem Material des Formteils A und deren Material der zweiten Oberfläche mit dem Material des Formteils B verträglich ist, wobei entweder die Folie C oder ein damit in Kontakt stehender Oberflächenbereich Laserstrahlung absorbiert,
d) Kontaktieren der ersten Oberfläche der Folie C mit dem Formteil A und der zweiten Oberfläche der Folie C mit dem Formteil B,
e) anschließend Einstrahlen von Laserstrahlung unter Aufschmelzen der Folie C und
f) erkalten lassen der aufgeschmolzenen Bereiche,
wobei entweder die Folie C oder ein damit in Kontakt stehender Oberflächenbereich ein Additiv enthält, das Laserstrahlung absorbiert,
**dadurch gekennzeichnet**
**dass** die Folie C aus zwei, drei, vier oder mehr Schichten besteht.

2. Verfahren gemäß Anspruch 1,
**dadurch gekennzeichnet,**
**dass** im Schritt d) die Folie zwischen die Formteile A und B gelegt wird.

3. Verfahren gemäß Anspruch 1,
**dadurch gekennzeichnet,**
**dass** im Schritt d) die Folie C in einer ersten Stufe mit einem der Formteile A und B verbunden wird.

4. Verfahren gemäß einem der vorhergehenden Ansprüche,
**dadurch gekennzeichnet,**
**dass** sich das Additiv, das Laserstrahlung absorbiert, in nur einer Schicht einer Folie C befindet, die aus zwei, drei, vier oder mehr Schichten besteht.

5. Verfahren gemäß einem der vorhergehenden Ansprüche,
**dadurch gekennzeichnet,**
**dass** das Verbundteil mehr als ein Formteil A, mehr als ein Formteil B und/oder mehr als eine Folie C enthält.

6. Verfahren gemäß einem der vorhergehenden Ansprüche,
**dadurch gekennzeichnet,**
**dass** die Dicke der Folie C 10 bis 500 µm beträgt.

7. Verbundteil, hergestellt gemäß einem der Ansprüche 1 bis 6.

## Claims

1. Method for the production of a composite part comprising at least two shaped articles which are not directly weldable to one another and consist of different thermoplastics or thermoplastic blends, which comprises the following steps:
a) provision of a shaped article A,
b) provision of a shaped article B whose material is incompatible with that of the shaped article A,
c) provision of a film C whose material of the first surface is compatible with the material of the shaped article A and whose material of the second surface is compatible with the material of the shaped article B, either the film C or a surface region in contact therewith absorbing laser radiation,
d) contacting of the first surface of the film C with the shaped article A and of the second surface of the film C with the shaped article B,
e) then incidence of laser radiation with melting of the film C and
f) allowing the molten regions to cool,
wherein either the film C or a surface region in contact therewith contains an additive which absorbs laser radiation,
**characterized in that** the film C consists of two, three, four or more layers.

2. Method according to Claim 1, **characterized in that**, in step d), the film is placed between the shaped articles A and B.

3. Method according to Claim 1, **characterized in that**, in step d), the film C is bonded in a first stage to one of the shaped articles A and B.

4. Method according to one of the preceding claims, **characterized in that** the additive which absorbs laser radiation is present in only one layer of a film C which consists of two, three, four or more layers.

5. Method according to any of the preceding claims, **characterized in that** the composite part contains more than one shaped article A, more than one shaped article B and/or more than one film C.

6. Method according to any of the preceding claims, **characterized in that** the thickness of the film C is from 10 to 500 µm.

7. Composite part produced according to any of Claims 1 to 6.

## Revendications

1. Procédé de fabrication d'une pièce composite constituée d'au moins deux pièces moulées non directement soudables l'une avec l'autre, qui sont constituées de différents thermoplastiques ou mélanges de thermoplastiques, qui contient les étapes suivantes :
a) la préparation d'une pièce moulée A,
b) la préparation d'une pièce moulée B, dont le matériau est incompatible avec celui de la pièce moulée A,
c) la préparation d'une feuille C, le matériau de la première surface de laquelle est compatible avec le matériau de la pièce moulée A et le matériau de la seconde surface de laquelle est compatible avec le matériau de la pièce moulée B, soit la feuille C, soit une zone de surface en contact avec celle-ci absorbant le rayonnement laser,
d) la mise en contact de la première surface de la feuille C avec la pièce moulée A et de la seconde surface de la feuille C avec la pièce moulée B, puis
e) l'exposition à un rayonnement laser avec fusion de la feuille C, et
f) le refroidissement des zones fondues,
soit la feuille C, soit une zone de surface en contact avec celle-ci contenant un additif qui absorbe le rayonnement laser,
**caractérisé en ce que**
la feuille C est constituée de deux, trois, quatre couches ou plus.

2. Procédé selon la revendication 1, **caractérisé en ce qu'**à l'étape d), la feuille est disposée entre les pièces moulées A et B.

3. Procédé selon la revendication 1, **caractérisé en ce qu'**à l'étape d), la feuille C est relié lors d'une première étape avec une des pièces moulées A et B.

4. Procédé selon l'une quelconque des revendications précédentes, **caractérisé en ce que** l'additif qui absorbe le rayonnement laser ne se trouve que dans une couche de la feuille C, qui est constituée de deux, trois, quatre couches ou plus.

5. Procédé selon l'une quelconque des revendications précédentes, **caractérisé en ce que** la pièce composite contient plus d'une pièce moulée A, plus d'une pièce moulée B et/ou plus d'une feuille C.

6. Procédé selon l'une quelconque des revendications précédentes, **caractérisé en ce que** l'épaisseur de la feuille C est de 10 à 500 µm.

7. Pièce composite, fabriquée selon l'une quelconque des revendications 1 à 6.
